# EUROPEAN PATENT SPECIFICATION

(11) **EP 0 360 449 B1**
(45) Date of publication and mention of the grant of the patent: **01.06.1994**
(21) Application number: 89308934.2
(22) Date of filing: 04.09.1989
(51) Int. Cl.: G01F 23/28, G01H 9/00, G01N 29/00

(54) **Acoustic transducing arrangements and methods**
Verfahren und Anordnung mit akustischem Wandler
Méthode et arrangement à transducteur acoustique

(30) Priority: 19.09.1988 US 246103
(43) Date of publication of application: 28.03.1990
(73) Proprietor: SIMMONDS PRECISION PRODUCTS INC., Wilmington Delaware 19894 (US)
(72) Inventor: Spillman, William B., Jr., Charlotte Vermont 05445 (US)
(74) Representative: Foster, David Martyn

(56) References cited:
- WO-A-88/01371
- FR-A- 2 584 183
- GB-A- 2 146 123

## Description

In one aspect, the invention relates to a method of emitting acoustic waves in a tank containing a liquid by using a transducer for producing acoustic energy and which is positioned within the liquid.

In another aspect, the invention relates to an acoustic transducing arrangement, comprising an acoustic transducer which is mounted within a tank containing a liquid and which is operative when energised to emit acoustic energy within the liquid.

Such method and arrangement are known from WO A-8 801 371. In this known method and arrangement the transducer in the liquid in the tank is a piezo-electric transducer. It therefore has to receive electrical energy and thus be connecting to an electrical power source. This not only requires an electrical wire connection to the transducer from outside the tank but may be unsatisfactory or unsafe if the liquid is flammable or explosive. The invention aims to overcome this problem.

According to the invention, therefore, the known method is characterised in that the transducer is a flexible member, and by the step of feeding electromagnetic radiation through an optical fibre from outside the tank and into impingement with the flexible member so as to cause the member to vibrate in response to such impingement and to emit acoustic energy.

Similarly, the known arrangement is characterised in that the acoustic transducer comprises a flexible member, and by an optical fibre for feeding electromagnetic radiation into impingement with the flexible member so as to cause the member to vibrate in response thereto and to emit acoustic energy.

GB-A-2 146 123 discloses a sensor arrangement, sensing the position of a piston in a cavity, in which a block of carbon black is illuminated, via an optical fibre, with light pulses, to generate acoustic energy causing vibration of gas within the cavity.

US-PS-4 677 305 (Ellinger, assigned to Simmonds Precision Products, Inc.) discloses an opto-acoustic fuel quantity gauging system which uses an electrically activated transducer.

Brown, D.H., "Liquid Level Measurement by Ultrasonic Ranging", Central Electricity Generating Board (London, Aug. 1976), discloses the concept of an ultrasonic ranging device for measuring the liquid level in a container. An ultrasonic pulse is propagated upwardly from the bottom of the container. The propagation time between the generation of the pulse and the reception of the reflected wave is indicative of the liquid level. US-PS-4 580 448 (Skrgatic) discloses a system somewhat similar to that of Brown and which uses an ultrasonic liquid level sensor in which an ultrasonic crystal transducer mounted exteriorly of the liquid container transmits a pulse through the container wall and the liquid and detects the reflected wave to determine liquid level.

US-PS-4 334 321 (Edelman) discloses an opto-acoustic transducer by which power-modulated light is transmitted through a fibre and absorbed to generate heat which, in turn, effects expansion and contraction of the light guide to develop sound energy. The transducer is indicated as providing an audio output of between 300 and 3300 Hz.

EP-A-0 232 610 discloses a photothermal oscillator force sensor which includes a beam of silicon caused to resonate by impingement of light thereon.

Optically controlled acoustic transmission and detection systems and methods according to the invention for fuel quantity gauging will now be described, by way of example only, with reference to the accompanying drawings, in which:-
Figure 1 is a schematic representation of one of the systems; and
Figure 2 is a schematic representation of another of the systems.

### DESCRIPTION OF PREFERRED EMBODIMENTS

In an embodiment of the invention to be described in more detail, an electrically passive optically controlled acoustic transceiver system is provided which measures the quantity of a liquid, such as aircraft fuel, in a tank. Pulsed electromagnetic radiation, such as light or infrared radiation, is guided through an optical fibre and impinged upon a flexible member of an opto-acoustic transducer. The flexible member is adapted to flex when heated. The energy of each pulse of electro-magnetic radiation is rapidly absorbed as heat by the flexible member. Preferably, the flexible member is a thin semispherical shaped black-coated metal member supported to allow it to flex when heated by the pulses of electromagnetic radiation. Each flexing of the metal member initiates an acoustic pulse which is directed to travel through a liquid to an air-liquid interface from which a reflected acoustic pulse returns through the liquid to a monitoring optical fibre. The monitoring optical fibre directs light (or infrared radiation) to a detector. The travel time of each of the acoustic pulses to and from the liquid-air interface is measured by monitoring the time between initiating the acoustic pulse and detecting the return of the reflected acoustic pulse. The return of the reflected acoustic pulse is detected as a change in the properties of the transmitted light or infrared radiation.

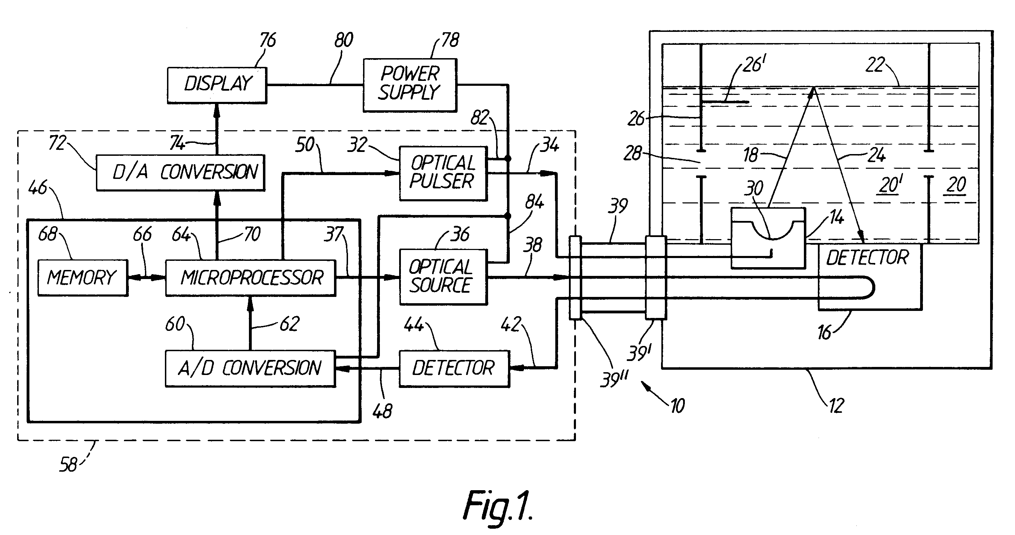

With more particular reference to Figure 1, an electrically passive opto-acoustic liquid quantity gauging system 10 for an aircraft is shown. The electrically passive acoustic fuel quantity gauging system shown generally at 10 includes a tank 12 which supports an acoustic source 14 and an acoustic detector 16, and encloses liquid fuel 20. The source 14 transmits acoustic output pulses 18 through still fuel 20′ enclosed by stillwell 26 to the liquid-air interface 22 from which acoustic reflection pulses 24 are reflected to acoustic detector 16. The stillwell 26 is supported by the tank 12 so that the pulses 18 and 24 travel through still fuel 20′ which is less turbulent in flight than is the portion of fuel 20 which is outside of the stillwell 26. Stillwell 26 supports reference reflector 26′. Fuel flows freely into and out of the stillwell 26 through aperture 28.

The source 14 preferably includes a metal member 30 having a rounded or semispherical (concave or convex) shape supported to allow flexion of the rounded portion. Preferably, at least a portion of the surface of the metal member 30 is nonreflective and black. Optical pulser 32 pulses high intensity light through optical fibre 34 to the plate 30 which rapidly flexes thereby transmitting acoustic pulses 18. The pulser 32 is preferably a pulsed laser, pulsed laser diode, Q-switched laser or optically pumped Q-switched laser.

The optical source 36 transmits light through optical fibre 38 to acoustic detector 16. Reflected acoustic pulses 24 impinge upon detector 16. The detector 16 is preferably a loop 40 in optical fibre 38. The fibre 38 may be a single mode or multimode optical fibre. The output portion 42 of fibre 38 channels the light to optical detector 44. The optical fibre 34, 38 and 42 extend through connectors 38′ and 39˝ and are protected by shielding 39. Detector 44 is connected to signal conditioning electronics 46 by electrical conductor 48. Signal conditioning electronics 46 is connected by electrical conductor 50 to the optical pulser 32.

Opto-acoustic signal conditioner 58 includes pulser source 36, detector 44 and signal conditioning electronics 46. Signal conditioning electronics 46 includes analog to digital (A/D) converter 60 which is connected by electrical conductor 48 to detector 44, and by electrical conductor 62 to microprocessor 64. Microprocessor 64 sends and receives signals from memory 68 through electrical conductor 66.

Microprocessor 64 sends digital signals through conductor 70 to D/A converter 72. D/A converter 72 sends analog signals through electrical conductor 74 to display 76. Power supply 78 supplies electrical power through electrical conductor 80 to display 76. Power supply 78 supplies electrical power through electrical conductor 82 to optical pulser 32. Electrical conductor 84 is connected to power supply 78 which supplies electrical power to optical source 36. Power supply 78 supplies electrical power through electrical conductor 86 to A/D converter 60 and to the other components of signal conditioner 58 through connections not shown.

By detecting and indicating changes in the light signal from the optical source 36, the return of the reflection pulses is detected and used to indicate the quantity of fuel in tank 12. The detector 44, which is preferably a photodetector, receives electromagnetic radiation, such as light, from the output portion 42 of optical fibre 38. It will be understood that any type of physical movement of the optical fibre 38, such as slight bending, in response to impact of the reflected acoustic pulses, will have an effect upon the light transmitted therethrough. Various parameters (or properties) of the light can be detected, such as back scattering sites, discontinuities, attenuation, and the like. The movement of the optical fibre caused by the impact of the returning acoustic waves (reflection pulses) causes changes in the properties of the light signal travelling within the optical fibre. Such changes in the properties of the light in the output portion of optical fibre 42 form optical information which is converted to electrical digital form in A/D converter 60 and fed into the microprocessor 64. The fuel quantity in tank 12 is determined in microprocessor 64 and signals representative of fuel quantity are displayed by display 70. The microprocessor 64 may send further signals to the optical pulser 32 to control the starting time of the acoustic wave pulses 18.

In order to carry out the level measurement, it is necessary to know the speed of sound in the fuel. Therefore, the time required for an acoustic wave pulse to travel to the reflector 26′ (a known distance) and be reflected therefrom and travel to the receiver (a known distance) is measured. The time required for an acoustic wave pulse to travel to and be reflected from the upper surface of the fuel is then measured. The level of the liquid is then accurately determined using the speed of sound in the fuel and the time required for the acoustic wave pulse to travel to and from the upper surface of the fuel. The fuel quantity and density are inferred from information stored in memory 68 about the volume of the tank 12 when filled to several levels and the speed of sound in the fuel and the speed of sound in the fuel determined from the measurement of the time for sound to travel the known distance to and from the reference reflector all as disclosed in above-mentioned US-PS-4 677 305.

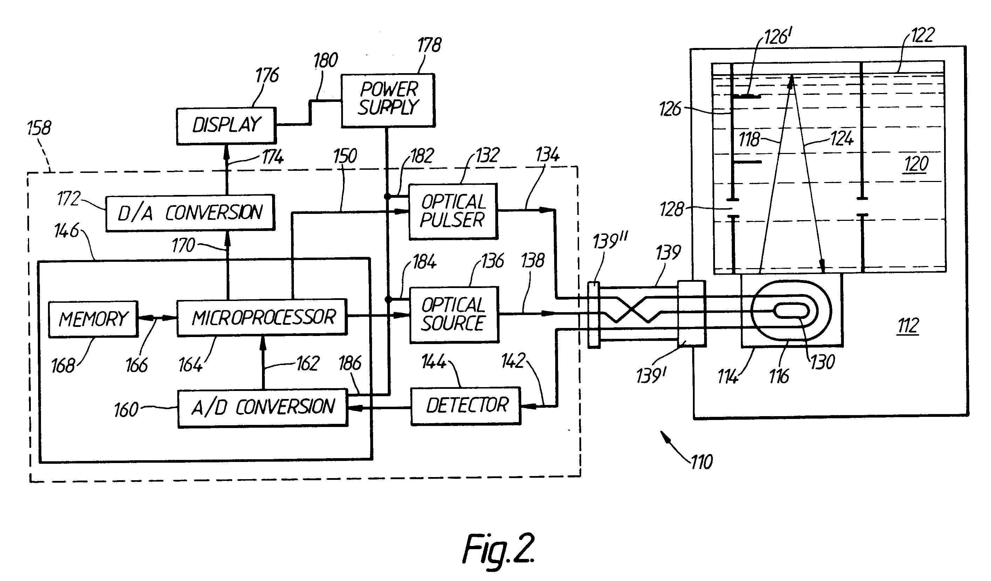

With more particular reference to Figure 2, an electrically passive opto-acoustic liquid quantity gauging system 110 is shown. The electrically passive acoustic fuel quantity gauging system 110 includes a tank 112 which supports acoustic source 114 and an acoustic detector 116. The acoustic source 114 transmits acoustic output pulses 118 through the portion 120′ of liquid fuel 120 enclosed by stillwell 126 to the liquid-air interface 122 from which acoustic reflection pulses 124 are reflected to acoustic detector 116. The stillwell 126 is supported by the tank 112 so that the pulses 118 and 124 travel through fuel 120′ which is less turbulent in flight than is fuel 120 which is outside of the stillwell 126. Stillwell 126 supports reference reflector 126′. Fuel flows freely into and out of the stillwell 126 through aperture 128.

The source 114 preferably includes a metal member 130 having a rounded or semispherical (concave or convex) shape supported to allow flexion of the rounded portion. Preferably, at least a portion of the surface of the metal member 130 is nonreflective and black. Optical pulser 132 pulses high intensity light through optical fibre 134 to the plate 130 which rapidly flexes thereby transmitting acoustic pulses 118. The pulser 132 is preferably a pulsed laser, pulsed laser diode, Q-switched laser or optically pumped Q-switched laser.

The optical source 136 transmits light through optical fibre 138 to acoustic detector 116. Reflected acoustic pulses 124 impinge upon detector 116. The detector 116 is preferably a loop 140 in optical fibre 138. The fibre 138 may be a single mode or multimode. The output portion 142 of fibre 138 channels the light to optical detector 144. The optical fibre 134, 138 and 142 extend through connectors 139′ and 139˝ and are protected by shielding 139. Detector 144 is connected to signal conditioning electronics 146 by electrical conductor 148. Signal conditioning electronics 146 is connected by electrical conductor 150 to high intensity optical pulser 132. Opto-acoustic signal conditioner 158 includes pulser source 136, detector 144 and signal conditioning electronics 146. Signal conditioning electronics 146 includes analog to digital (A/D) converter 160 which is connected by electrical conductor 148 to detector 144, and by electrical conductor 162 to microprocessor 164. Microprocessor 164 sends and receives signals from memory 168 through electrical conductor 166. Microprocessor 164 sends digital signal through conductor 170 to D/A converter 172. D/A converter 172 sends analog signals through electrical conductor 174 to display 176. Power supply 178 supplies electrical current through electrical Conductor 180 to display 176. Power supply 178 supplies electrical current through electrical conductor 182 to optical pulser 132. Power supply 178 is connected through electrical conductor 184 to optical source 136 and through electrical conductor 186 to A/D converter 169.

By detecting and indicating changes in the light signal from the optical source 136, the return of the reflection pulses is detected and used to indicate the quantity of fuel in tank 112. The optical detector 144, which is preferably a photodetector, receives electromagnetic radiation, such as light from the output portion 142 of optical fibre 138. As explained in relation to Figure 1, any type of physical movement of the optical fibre 138, such as slight bending, will have an effect upon the light transmitted therethrough. Various parameters (or properties) of the light can be detected, such as back scattering sites, discontinuities, attenuation, and the like. Such effects on the light in optical fibre 138 result from the physical movement of the reflected acoustic waves which impact on, and result in the movement of, the optical fibre in acoustic detector 116. The optical information is converted to digital form in A/D converter 160 and fed into the microprocessor 164. Fuel quantity measurement signals from the microprocessor 164 are displayed by display 170. Movement of the acoustic detector 116 is monitored by following the corresponding changes in the parameters of the light passing through the fibre 138, which are detected by optical detector 144 and processed in the microprocessor 164. The microprocessor 164 may send further signals to the optical pulser 132 to control the starting time of the acoustic wave pulses 118.

The metal member 130 in the acoustic source 114 is an optical absorber which absorbs the energy of the light pulses transmitted through the optical fibre 134 to the absorber from the optical pulser 132. The optical energy is converted to heat in the absorber which undergoes a rapid expansion to generate an acoustic wave pulse 118. The wave pulse 118 propagates upwardly to the surface of the liquid and a reflected wave pulse 124 is reflected downward from the liquid-air interface. The acoustic detector 116 (which may be a fibre-optic hydrophone) detects the reflected wave pulse 124. The liquid level is determined as a function of the acoustic pulse propagation time in the manner explained in connection with Fig. 1.

The liquid level may be measured by detecting the change in the intensity of the light transmitted through fibre 138. Instead, the change in the polarization state of the transmitted light is monitored. Another possibility is to use interferometrics.

Tanks in which liquid quantity may be measured using the systems disclose may be made of metal sheeting, polymeric (organic or inorganic), composite or other suitable material. Preferred organic polymeric materials include thermoplastic and thermoset polymers. These materials may include a matrix of metal, for example aluminium, thermoplastic such as polyetherether ketone (PEEK), thermoset polymer or ceramic. A preferred composite structure includes high strength filaments or fibres in a polymeric matrix such as a crosslinked epoxy or maleinide.

Epoxy resins are well established for use in making high performance composite structures which include high strength fibre.

Preferred fibre materials are metal, glass, boron, carbon, graphite, continuous or chopped, or the like, such as disclosed in US-PS-4 656 208 (Chu et al). Structures made of these composites can weigh considerably less than their metal counterparts of equivalent strength and stiffness.

The tanks may be fabricated as disclosed in US-PS-4 581 086 (Gill et al, assigned to Hercules Incorporated). Helical applicators may be used to deposit a ply or plies of continuous filaments into the form of the tank as disclosed in US-PS-4 519 869 (Gill et al, assignee, Hercules Incorporated). Alternatively, multiphase epoxy thermosets having rubber within a disperse phase may be used to make tanks, as disclosed in US-PS-4 680 078 (Bard assigned to Hercules Incorporated). Optical fibres and transceivers may be embedded in or attached to these tanks during fabrication. Attachment to the tanks of the optical fibres transceivers after construction may be carried out using the same or a different matrix material than is used to fabricate the underlying tanks.

Other matrix compositions which may be used to make tanks include poly(aryl-acetylene) as disclosed in US-PS-4 070 333, US-PS-4 097 460, and US-PS-4 144 218. US-PS-4 656 208 discloses thermosetting epoxy resin compositions and thermo-sets therefrom.

## Claims

1. A method of emitting acoustic waves in a tank (12;112) containing a liquid (20;120) by using a transducer (30;130) for producing acoustic energy and which is positioned within the liquid (20;120), characterised in that the transducer is a flexible member (30;130), and by the step of feeding electromagnetic radiation through an optical fibre (34;134) from outside the tank and into impingement with the flexible member (30;130) so as to cause the member (30;130) to vibrate in response to such impingement and to emit acoustic energy.

2. A method according to claim 1, characterised in that the flexible member (30;130) is caused to move by heat imparted thereto by the impinging electromagnetic radiation.

3. A method according to claim 1 or 2, characterised by the step of causing the emitted acoustic energy to impinge on an output transducing member (16;116) which responds by producing a corresponding output.

4. A method according to claim 3, characterised in that the output transducing member (38;42;138;142) is an output movable member.

5. A method according to claim 4, characterised in that the output movable member (38;42;138;142) produces the said corresponding output by modulating further electromagnetic energy.

6. A method according to claim 5, characterised in that the step of modulating the further electromagnetic energy is carried out by means of a second optical fibre (38;42;138;142), part of which constitutes the output movable member.

7. A method according to any preceding claim, characterised in that the electromagnetic radiation is visible light.

8. A method according to any one of claims 1 to 6, characterised in that the electromagnetic radiation is infra-red radiation.

9. A method according to claim 6, characterised in that the electromagnetic radiation in the first-mentioned optical fibre (34;134) is infra-red radiation and the electromagnetic radiation in the second optical fibre (38;138) is visible light.

10. A method according to any preceding claim, characterised by the step of causing the emitted acoustic energy to be reflected from the surface (22;122) of the liquid (20;120) in the tank (12;112), and determining the quantity of liquid (20;120) in the tank (12;112) in dependence upon the time of travel of the acoustic energy to and from the liquid surface (22;122), the predetermined speed of transmission of acoustic energy within the liquid (20;120), and the dimensions of the tank (12;112).

11. A method according to claim 3, characterised by the step of causing the emitted acoustic energy to travel through the liquid (20;120) in the tank (12;112) to the surface (22;122) of the liquid (20;120) in the tank (12;112) so as to be reflected from that surface (22;122), and in that the step of causing the emitted acoustic energy to impinge on the output transducing member (16;116) comprises the step of receiving the acoustic energy reflected from the said surface (22;122) of the liquid and causing it to impinge on the output transducing member (16;116) to produce the corresponding output, and by the step of determining from the corresponding output the quantity of liquid (20;120) in the tank (12;112) in dependence upon the time of travel of the acoustic energy to and from the liquid surface (22;122), the predetermined speed of transmission of acoustic energy within the liquid (20;120), and the dimensions of the tank (12;112).

12. An acoustic transducing arrangement, comprising an acoustic transducer which is mounted within a tank (12;112) containing a liquid (20;120) and which is operative when energised to emit acoustic energy within the liquid, characterised in that the acoustic transducer comprises a flexible member (30;130), and by an optical fibre (34;134) for feeding electromagnetic radiation into impingement with the flexible member (30;130) so as to cause the member (30;130) to vibrate in response thereto and to emit acoustic energy.

13. An arrangement according to claim 12, characterised in that the flexible member (30;130) is adapted to flex where heated, and in that the impinging electromagnetic radiation heats the flexible member.

14. An arrangement according to claim 12, characterised in that the flexible member is a curved thin member (30;130) made of metal and treated to absorb heat.

15. An arrangement according to any one of claims 12 to 14, characterised by an acoustic energy receiving transducer (16;116) responsive to the acoustic energy produced by the transducing member (30;130) to produce a corresponding output.

16. An arrangement according to claim 15, characterised in that the acoustic energy receiving transducer (16;116) comprises an electrically passive device (38,42) carrying electromagnetic energy and subject to impingement thereon of the acoustic energy whereby such impingement causes modulation of the carried electromagnetic radiation.

17. An arrangement according to claim 16, characterised in that the electrically passive device (38,42) of the acoustic energy receiving transducer (16;116) comprises a movable member (38,42) carrying the said electromagnetic energy which member (38,42) moves in response to impingement thereof of the acoustic energy whereby such impingement causes the said modulation of the electromagnetic radiation.

18. An arrangement according to claim 17, characterised in that the movable member (38,42) carrying the electromagnetic energy comprises an optical fibre.

19. An arrangement according to any one of claims 15 to 18 and for measuring the level of the liquid (20;120) in the tank (12;112), characterised in that the transducing member (30;130) is positioned to direct the acoustic energy towards the liquid surface (22;122), in that the acoustic energy receiving transducer (16;116) is positioned to receive the acoustic energy reflected from the said surface (22;122), and by output means (58;158) responsive to the received acoustic energy and operative to produce an output indicative of the liquid level.

20. An arrangement according to claim 19, characterised in that the output means comprises signal processing means (46;146) responsive to the received acoustic energy to produce a corresponding electrical signal and operative in dependence on that electrical signal and on stored information relating to the velocity of acoustic energy within the liquid (20;120) and to the physical dimensions of the tank (12;120) to produce an output corresponding to the quantity of liquid in the tank.

21. An arrangement according to any one of claims 12 to 20, characterised in that the electromagnetic radiation is light or infra-red radiation.

## Patentansprüche

1. Verfahren zum Aussenden von akustischen Wellen in einem eine Flüssigkeit (20; 120) enthaltenden Tank (12;112) mit einem in der Flüssigkeit (20; 120) positionierten Wandler (30; 130) zum Erzeugen akustischer Energie, dadurch gekennzeichnet, daß der Wandler ein flexibles Glied (30; 130) ist, und durch den Schritt des Durchspeisens elektromagnetischer Strahlung durch eine Lichtleitfaser (34; 134) von außerhalb des Tanks und in ein Auftreffen auf das flexible Glied (30; 130), um zu bewirken, daß das Glied (30; 130) als Reaktion auf ein solches Auftreffen schwingt und akustische Energie aussendet.

2. Verfahren nach Anspruch 1, dadurch gekennzeichnet, daß das flexible Glied (30; 130) durch diesem durch die auftreffende elektromagnetische Strahlung mitgeteilte Wärme zur Bewegung veranlaßt wird.

3. Verfahren nach Anspruch 1 oder 2, gekennzeichnet durch den Schritt des Bewirkens, daß die ausgesandte akustische Energie auf ein Ausgabewandelglied (16; 116) auftrifft, das durch Erzeugen einer entsprechenden Ausgabe reagiert.

4. Verfahren nach Anspruch 3, dadurch gekennzeichnet, daß das Ausgabewandelglied (38; 42; 138; 142) ein bewegliches Ausgabeglied ist.

5. Verfahren nach Anspruch 4, dadurch gekennzeichnet, daß das bewegliche Ausgabeglied (38; 42; 138; 142) die besagte entsprechende Ausgabe durch Modulieren weiterer elektromagnetischer Energie erzeugt.

6. Verfahren nach Anspruch 5, dadurch gekennzeichnet, daß der Schritt des Modulierens der weiteren elektromagnetischen Energie mittels einer zweiten Lichtleitfaser (38; 42; 138; 142) ausgeführt wird, wobei ein Teil derselben das bewegliche Ausgabeglied darstellt.

7. Verfahren nach einem der vorhergehenden Ansprüche, dadurch gekennzeichnet, daß die elektromagnetische Strahlung sichtbares Licht ist.

8. Verfahren nach einem der Ansprüche 1 bis 6, dadurch gekennzeichnet, daß die elektromagnetische Strahlung Infrarotstrahlung ist.

9. Verfahren nach Anspruch 6, dadurch gekennzeichnet, daß die elektromagnetische Strahlung in der ersterwähnten Lichtleitfaser (34; 134) Infrarotstrahlung und die elektromagnetische Strahlung in der zweiten Lichtleitfaser (38; 138) sichtbares Licht ist.

10. Verfahren nach einem der vorhergehenden Ansprüche, gekennzeichnet durch den Schritt des Bewirkens, daß die ausgesandte akustische Energie von der Oberfläche (22; 122) der Flüssigkeit (20; 120) im Tank (12; 112) reflektiert wird, und des Bestimmens der Menge von Flüssigkeit (20; 120) im Tank (12; 112) in Abhängigkeit von der Laufzeit der akustischen Energie zu und von der Flüssigkeitsoberfläche (22; 122), der vorbestimmten Übertragungsgeschwindigkeit akustischer Energie in der Flüssigkeit (20; 120) und den Abmessungen des Tanks (12; 112).

11. Verfahren nach Anspruch 3, gekennzeichnet durch den Schritt des Bewirkens, daß die ausgesandte akustische Energie die Flüssigkeit (20; 120) im Tank (12; 112) zur Oberfläche (22; 122) der Flüssigkeit (20; 120) im Tank (12; 112) durchläuft, so daß sie von dieser Oberfläche (22; 122) reflektiert wird, und dadurch, daß der Schritt des Bewirkens, daß die ausgesandte akustische Energie auf das Ausgabewandelglied (16; 116) auftrifft den Schritt des Empfangens der von der besagten Oberfläche (22; 122) der Flüssigkeit reflektierten akustischen Energie und des Bewirkens, daß sie auf das Ausgabewandelglied (16; 116) auftrifft, um die entsprechende Ausgabe zu erzeugen, umfaßt, und durch den Schritt des Bestimmens der Menge von Flüssigkeit (20; 120) im Tank (12; 112) aus der entsprechenden Ausgabe in Abhängigkeit von der Laufzeit der akustischen Energie zu und von der Flüssigkeitsoberfläche (22; 122), der vorbestimmten Übertragungsgeschwindigkeit akustischer Energie in der Flüssigkeit (20; 120) und den Abmessungen des Tanks (12; 112).

12. Akustische Wandelanordnung mit einem akustischen Wandler, der in einem eine Flüssigkeit (20; 120) enthaltenden Tank (12; 112) befestigt ist und der bei seiner Erregung das Aussenden akustischer Energie in der Flüssigkeit bewirkt, dadurch gekennzeichnet, daß der akustische Wandler ein flexibles Glied (30; 130) umfaßt, und durch eine Lichtleitfaser (34; 134) zum Einspeisen elektromagnetischer Strahlung in ein Auftreffen auf das flexible Glied (30; 130), um das Glied (30; 130) als Reaktion darauf zum Schwingen und zum Aussenden von akustischer Energie zu veranlassen.

13. Anordnung nach Anspruch 12, dadurch gekennzeichnet, daß das flexible Glied (30; 130) dort, wo es erwärmt wird sich biegen kann, und daß die auftreffende elektromagnetische Strahlung das flexible Glied erwärmt.

14. Anordnung nach Anspruch 12, dadurch gekennzeichnet, daß das flexible Glied ein für die Aufnahme von Wärme behandeltes gekrümmtes dünnes Glied (30; 130) aus Metall ist.

15. Anordnung nach einem der Ansprüche 12 bis 14, gekennzeichnet durch einen auf die vom Wandelglied (30; 130) erzeugte akustische Energie reagierenden Empfangswandler (16; 116) für akustische Energie zur Erzeugung einer entsprechenden Ausgabe.

16. Anordnung nach Anspruch 15, dadurch gekennzeichnet, daß der Empfangswandler (16; 116) für akustische Energie eine elektrisch passive Vorrichtung (38, 42) umfaßt, die elektromagnetische Energie führt und dem Auftreffen der akustischen Energie auf diese ausgesetzt ist, wobei ein solches Auftreffen die Modulation der geführten elektromagnetischen Strahlung bewirkt.

17. Anordnung nach Anspruch 16, dadurch gekennzeichnet, daß die elektrisch passive Vorrichtung (38, 42) des Empfangswandlers (16; 116) für akustische Energie ein die besagte elektromagnetische Energie führendes bewegliches Glied (38, 42) umfaßt, daß sich als Reaktion auf das Auftreffen der akustischen Energie auf dieses bewegt, wobei ein solches Auftreffen die besagte Modulation der elektromagnetischen Strahlung bewirkt.

18. Anordnung nach Anspruch 17, dadurch gekennzeichnet, daß das die elektromagnetische Energie führende bewegliche Glied (38, 42) eine Lichtleitfaser umfaßt.

19. Anordnung nach einem der Ansprüche 15 bis 18 und zum Messen der Höhe der Flüssigkeit (20; 120) im Tank (12; 112), dadurch gekennzeichnet, daß das Wandelglied (30; 130) zum Leiten der akustischen Energie auf die Flüssigkeitsoberfläche (22; 122) positioniert ist, daß der Empfangswandler (16; 116) für akustische Energie zum Empfangen der von der besagten Oberfläche (22; 122) reflektierten akustischen Energie positioniert ist, und durch auf die empfangene akustische Energie reagierende Ausgabemittel (58; 158), die die Erzeugung einer die Flüssigkeitshöhe anzeigenden Ausgabe bewirken.

20. Anordnung nach Anspruch 19, dadurch gekennzeichnet, daß die Ausgabemittel auf die empfangene akustische Energie reagierende Signalverarbeitungsmittel (46; 146) zum Erzeugen eines entsprechenden elektrischen Signals umfassen, die in Abhängigkeit von diesem elektrischen Signal und von gespeicherten Informationen betreffs der Geschwindigkeit akustischer Energie in der Flüssigkeit (20; 120) und den physikalischen Abmessungen des Tanks (12; 120) die Erzeugung einer der Flüssigkeitsmenge im Tank entsprechenden Ausgabe bewirken.

21. Anordnung nach einem der Ansprüche 12 bis 20, dadurch gekennzeichnet, daß die elektromagnetische Strahlung Licht oder Infrarotstrahlung ist.

## Revendications

1. Procédé d'émission d'ondes acoustiques dans un réservoir (12 ; 112) contenant un liquide (20 ; 120) en utilisant un transducteur (30 ; 130) pour produire de l'énergie acoustique, lequel est positionné à l'intérieur du liquide (20 ; 120), caractérisé en ce que le transducteur est un élément flexible (30 ; 130) et par l'étape d'application d'un rayonnement électromagnétique au travers d'une fibre optique (34 ; 134) depuis l'extérieur du réservoir de telle sorte qu'il arrive sur l'élément flexible (30 ; 130) de manière à provoquer la vibration de l'élément (30 ; 130) en réponse à cette arrivée et de manière à émettre de l'énergie acoustique.

2. Procédé selon la revendication 1, caractérisé en ce que l'élément flexible (30 ; 130) est amené à se déplacer du fait de la chaleur qui lui est imprimée par le rayonnement électromagnétique arrivant.

3. Procédé selon la revendication 1 ou 2, caractérisé par l'étape consistant en ce que l'énergie acoustique émise est amenée sur un élément de transducteur de sortie (16 ; 116) qui répond en produisant une sortie correspondante.

4. Procédé selon la revendication 3, caractérisé en ce que l'élément de transducteur de sortie (38 ; 42 ; 138 ; 142) est un élément mobile de sortie.

5. Procédé selon la revendication 4, caractérisé en ce que l'élément mobile de sortie (38 ; 42 ; 138 ; 142) produit ladite sortie correspondante en modulant l'énergie électromagnétique supplémentaire.

6. Procédé selon la revendication 5, caractérisé en ce que l'étape de modulation de l'énergie électromagnétique supplémentaire est mise en oeuvre au moyen d'une seconde fibre optique (38 ; 42 ; 138 ; 142) dont une partie constitue l'élément mobile de sortie.

7. Procédé selon l'une quelconque des revendications précédentes, caractérisé en ce que le rayonnement électromagnétique est une lumière visible.

8. Procédé selon l'une quelconque des revendications 1 à 6, caractérisé en ce que le rayonnement électromagnétique est un rayonnement infrarouge.

9. Procédé selon la revendication 6, caractérisé en ce que le rayonnement électromagnétique dans la fibre optique mentionnée en premier (34 ; 134) est un rayonnement infrarouge et le rayonnement électromagnétique dans la seconde fibre optique (38 ; 138) est une lumière visible.

10. Procédé selon l'une quelconque des revendications précédentes, caractérisé par l'étape consistant en ce que l'énergie acoustique émise est réfléchie depuis la surface (22 ; 122) du liquide (20 ; 120) contenu dans le réservoir (12 ; 112) et en la détermination de la quantité du liquide (20 ; 120) contenu dans le réservoir (12 ; 112) en fonction du temps de déplacement de l'énergie acoustique vers et depuis la surface de liquide (22 ; 122), de la vitesse prédéterminée de transmission de l'énergie acoustique dans le liquide (20 ; 120) et des dimensions du réservoir (12 ; 112).

11. Procédé selon la revendication 3, caractérisé par l'étape consistant en ce que l'énergie acoustique émise se déplace au travers du liquide (20 ; 120) contenu dans le réservoir (12 ; 112) jusqu'à la surface (22 ; 122) du liquide (20 ; 120) contenu dans le réservoir (12 ; 112) de manière à ce qu'elle soit réfléchie depuis cette surface (22 ; 122) et en ce que l'étape consistant en ce que l'énergie acoustique émise arrive sur l'élément transducteur de sortie (16 ; 116) comprend l'étape de réception de l'énergie acoustique réfléchie depuis ladite surface (22 ; 122) du liquide et l'amenée de celle-ci sur l'élément de transducteur de sortie (16 ; 116) afin de produire la sortie correspondance et par l'étape de détermination, à partir de la sortie correspondante, de la quantité du liquide (20 ; 120) contenu dans le réservoir (12 ; 112) en fonction du temps de déplacement de l'énergie acoustique vers et depuis la surface de liquide (22 ; 122), de la vitesse prédéterminée de transmission de l'énergie acoustique à l'intérieur du liquide (20 ; 120) et des dimensions du réservoir (12 ; 112).

12. Agencement de transducteur acoustique, comprenant un transducteur acoustique qui est monté à l'intérieur d'un réservoir (12 ; 112) contenant un liquide (20 ; 120) et qui fonctionne lorsqu'il est activé pour émettre de l'énergie acoustique à l'intérieur du liquide, caractérisé en ce que le transducteur acoustique comprend un élément flexible (30 ; 130), et par une fibre optique (34 ; 134) pour faire arriver un rayonnement électromagnétique sur l'élément flexible (30 ; 130) de manière à provoquer la vibration de l'élément (30 ; 130) en réponse à cette arrivée et à émettre de l'énergie acoustique.

13. Agencement selon la revendication 12, caractérisé en ce que l'élément flexible (30 ; 130) est conçu pour fléchir à la chaleur et en ce que le rayonnement électromagnétique arrivant chauffe l'élément flexible.

14. Agencement selon la revendication 12, caractérisé en ce que l'élément flexible est un élément mince incurvé (30 ; 130) réalisé en métal et traité pour absorber la chaleur.

15. Agencement selon l'une quelconque des revendications 12 à 14, caractérisé par un transducteur de réception d'énergie acoustique (16 ; 116) sensible à l'énergie acoustique produite par l'élément de transducteur (30 ; 130) afin de produire une sortie correspondante.

16. Agencement selon la revendication 15, caractérisé en ce que le transducteur de réception d'énergie acoustique (16 ; 116) comprend un dispositif électriquement passif (38, 42) porteur d'énergie électromagnétique et soumis à une arrivée sur lui de l'énergie acoustique et ainsi, cette arrivée provoque la modulation du rayonnement électromagnétique porté.

17. Agencement selon la revendication 16, caractérisé en ce que le dispositif électriquement passif (38, 42) du transducteur de réception d'énergie acoustique (16 ; 116) comprend un élément mobile (38, 42) porteur de ladite énergie électromagnétique, lequel élément (38, 42) se déplace en réponse à une arrivée de l'énergie acoustique et ainsi, cette arrivée provoque ladite modulation du rayonnement électromagnétique.

18. Agencement selon la revendication 17, caractérisé en ce que l'élément mobile (38, 42) porteur de l'énergie électromagnétique comprend une fibre optique.

19. Agencement selon l'une quelconque des revendications 15 à 18, permettant de mesurer le niveau du liquide (20 ; 120) contenu dans le réservoir (12 ; 112), caractérisé en ce que l'élément de transducteur (30 ; 130) est positionné de manière à diriger l'énergie acoustique en direction de la surface de liquide (22 ; 122), en ce que le transducteur de réception d'énergie acoustique (16 ; 116) est positionné pour recevoir l'énergie acoustique réfléchie depuis ladite surface (22 ; 122), et par un moyen de sortie (58 ; 158) sensible à l'énergie acoustique reçue et fonctionnant pour produire une sortie indicative du niveau du liquide.

20. Agencement selon la revendication 19, caractérisé en ce que le moyen de sortie comprend un moyen de traitement de signal (46 ; 146) sensible à l'énergie acoustique reçue pour produire un signal électrique correspondant et fonctionnant en dépendance avec ce signal électrique et avec une information stockée concernant la vitesse de l'énergie acoustique à l'intérieur du liquide (20 ; 120) et avec les dimensions physiques du réservoir (12 ; 120) pour produire une sortie correspondant à la quantité de liquide dans le réservoir.

21. Agencement selon l'une quelconque des revendications 12 à 20, caractérisé en ce que le rayonnement électromagnétique est un rayonnement de lumière ou un rayonnement infrarouge.
